# EUROPEAN PATENT SPECIFICATION

(11) **EP 1 689 505 B1**
(45) Date of publication and mention of the grant of the patent: **09.07.2008**
(21) Application number: 04812140.4
(22) Date of filing: 23.11.2004
(51) Int. Cl.: B01D 21/24, B01D 24/38, B01D 25/30, B01D 29/88, B01D 33/70, B01D 35/00

(54) **BACKWASH FLUSHING FILTER**
RÜCKSPÜLFILTER
FILTRE A CHASSE ET A LAVAGE A CONTRE-COURANT

(30) Priority: 05.12.2003 US 728479; 16.09.2004 US 942685
(43) Date of publication of application: 16.08.2006
(73) Proprietor: Dosmatic USA, Inc., Carrollton, TX 75006 (US)
(72) Inventor: WALTON, Frank, A., Ft. Worth, TX 76109 (US); MANN, James, A., Jr., Anna, TX 75409 (US); WILLIAMS, James, E., Richardson, TX 75052 (US)
(74) Representative: Gosnall, Toby
(86) International application number: PCT/US2004/039559
(87) International publication number: WO 2005/061072

(56) References cited:
- EP-A1- 0 634 199
- WO-A-00/72939
- DE-A1- 2 822 361
- US-A- 3 513 981
- US-A- 3 834 537
- US-A- 4 515 692
- US-A- 4 542 369
- US-A- 4 862 914
- US-A- 5 057 214
- US-A- 5 118 418

## Description

### 1. Technical Field

The present invention relates to an apparatus and method for improving the cleaning operation of an inline filter and, more specifically, for the backwash and flushing of the filter element and filter assembly without taking the filter assembly offline for a prolonged period and does not require any special tools or skills to operate.

### 2. Description of Related Art

Filters are commonly used to remove particulates and undesired solids from a fluid medium. A common filtration process involves passing a fluid through a filter medium. Solids are retained on the filter medium, while the fluid passes through the filter medium and continues down stream. However, as solids begin to accumulate on the filter media, the differential pressure across the filter medium increases and consequentially the fluid flow rate decreases. Likewise, the solids retained on the filter may slough due to gravitational force and begin to form a sediment which collects at the lower end of the filter assembly which further decreases the efficiency of the filtration system.

In order to return the filter and the system to peak operating efficiency, the solids which are retained by the filter must be removed from the filter, along with the sedimentation located at the bottom of the filter assembly. A common method of filter particulate removal is known as "backwashing" wherein the filter is taken offline, and the flow of fluid through the filter element reversed. The principal of hydrodynamic shear removes the accumulated solids from the filter media. These solids which have now become suspended in the backwash fluid are then directed to a waste drain. Depending on the location of the waste drain port located on the filter assembly, the sediments which have collected at the bottom of the filter assembly either remain or inhibit the flow of the backwash waste water. As such, the lower filter assembly usually requires manual cleaning by the operator, which increases the time the filter system is offline and out of operation. Once the filter media and filter assembly are cleaned, the filter system is then placed back into operation until the next backwashing is desired or required.

Unfortunately, most filtration backwash systems require the filter to be taken offline and placed out of service while the backwash operation is performed. This is due, in part, to the consistent design of filtration systems wherein the filter assembly does not provide an efficient mechanism for removing sedimentary solids which have accumulated at the bottom of the filter assembly. Moreover, most prior art backwash systems require a secondary piping system dedicated solely to the backwashing process whereby backwash water is introduced and circulated in the opposite direction of normal, operational fluid flow for purposes of removing the accumulated solids on the filter media.

In view of the drawbacks which exist in the prior art, a need exists for an improved filter backwash apparatus that provides the ability to backwash the filter media without requiring that the filter be taken offline for an extended period of time. Similarly, a need exists in the art for an improved filter backwash apparatus which can provide a quick, efficient flushing mechanism to remove sedimentary solids which have accumulated in the filter assembly.

Accordingly, it is an object of this invention to provide a backwashable filter assembly which does not require the cessation of filter operations for an extended period of time during the backwashing process. It is further an object of this invention to provide a backwashable filter system that does not require a secondary piping system dedicated to backwashing operations. It is further an object of this invention to provide a backwashable filter assembly that incorporates an efficient flushing mechanism which results in the removal of solids from the filter media and the removal of sedimentary solids which have collected at the bottom of the filter assembly. It is further an object of this invention to perform these multiple functions in a single, one-quarter turn movement to initiate the backwash process, and to return to normal filter operations in a reverse single, one-quarter turn movement. It is a further object of this invention to provide a backwash, flushing filter with a unique flat seal around the inlet and outlet ports to minimize fluid "blowby" during filter and backwash operations. It is further an object of this invention to provide a unique application of a dual tab-lock and sealing mechanism allowing for the operation and backwash operation of the filter unit disclosed herein without leakage between moving components. It is a further object of this invention to incorporate a unique mechanism for retaining a gasket seal located near the backwash fluid drain port which retains the seal in place during the fluid turbulence generated during backwash operations. It is a further object of this invention to incorporate a unique filter assembly design that utilizes a slot design to capture accumulated solids by reducing fluid turbulence and yet provide for effective backwash operations. Further objects of this invention will be apparent to persons knowledgeable with devices of this general type upon reading the following description and examining the accompanying drawings.

### SUMMARY OF THE INVENTION

In accordance with the foregoing obj ects, the present invention--a self-cleaning, backwash flushing filter system-generally comprises a system inlet; a filter assembly, a backwash drain pipe and a filtered fluid outlet in selective fluid communication with the system inlet.

The preferred embodiment of the present backwash flushing filter assembly invention comprises a header assembly, a rotatable valve assembly, a filter element assembly, and a filter housing assembly. In a single operation, the controller moves the turn knob on the rotatable valve assembly a one-quarter turn to reverse the flow of fluid through the filter assembly, including the filter element assembly. Any debris removed from the filter element media during the backwash process are immediately discharged from the system through the drain port located in the bottom portion of the filter housing. The hydraulic shearing mechanism of the backwash fluid breaks up and dislodges any debris which have accumulated on the filter media and at the bottom of the filter assembly during normal filter operation, which are then removed from the filter assembly through the backwash drain port. The controller then returns the filter assembly operation to filtration operation by a reverse one-quarter turn of the turn knob, which again reverses the fluid flow through the filter assembly and normal filtration operation commences once again.

Many other features, objects and advantages of the present invention will be apparent to those of ordinary skill in the relevant arts, especially in light of the foregoing discussions and the following drawings, exemplary detailed description and appended claims.

### BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying drawings wherein:
**Figure 1** is a perspective view of the backwash flushing filter assembly embodying the invention disclosed herein;
**Figure 2** is a fragmentary view of the components of the backwash flushing filter assembly embodying the invention disclosed herein;
**Figure 3** is a profile cross-sectional view of the backwash flushing filter assembly shown in the assembled mode;
**Figure 4A** is a top cross-sectional view of the rotatable valve assembly shown in standard filter operation mode;
**Figure 4B** is a profile cross-sectional view of the backwash flushing filter in standard filter operation;
**Figure 4C** is a top cross-sectional view of the rotatable valve assembly shown in filter backwash operation mode;
**Figure 4D** is a profile cross-sectional view of the backwash flushing filter in filter backwash operation mode;
**Figure 5** is a perspective view of a backwash flushing filter assembly in accordance with another embodiment of the invention disclosed herein; and
**Figure 6** is a profile cross-sectional view of the backwash flushing filter assembly of **Figure 5** shown in the assembled mode.

### DETAILED DESCRIPTION OF THE INVENTION

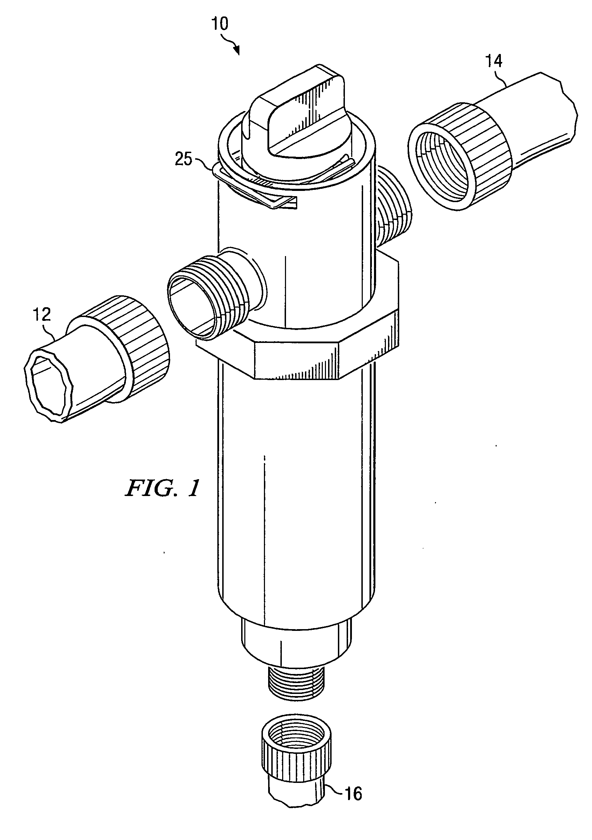

The preferred embodiment of the invention disclosed herein as shown in **FIGS.1-4D** is a backwash flushing filter assembly **10** whereby switching from filtration mode to backwash flushing mode is performed by a one-quarter turn of the rotatable valve assembly and vice versa as discussed in further detail below.

**Figure 1** depicts the assembled backwash flushing filter assembly **10** with connection points to a fluid source pipe **12,** filtered fluid outlet pipe **14,** and backwash drain pipe **16.** The filter assembly **10** is preferably constructed so that the filter assembly **10** can be readily accessed to permit visual component inspection, filter media removal and replacement, if necessary. The filter assembly **10** can be constructed in a variety of sizes to accommodate both standard and custom filter element sizes and uses as known in the art.

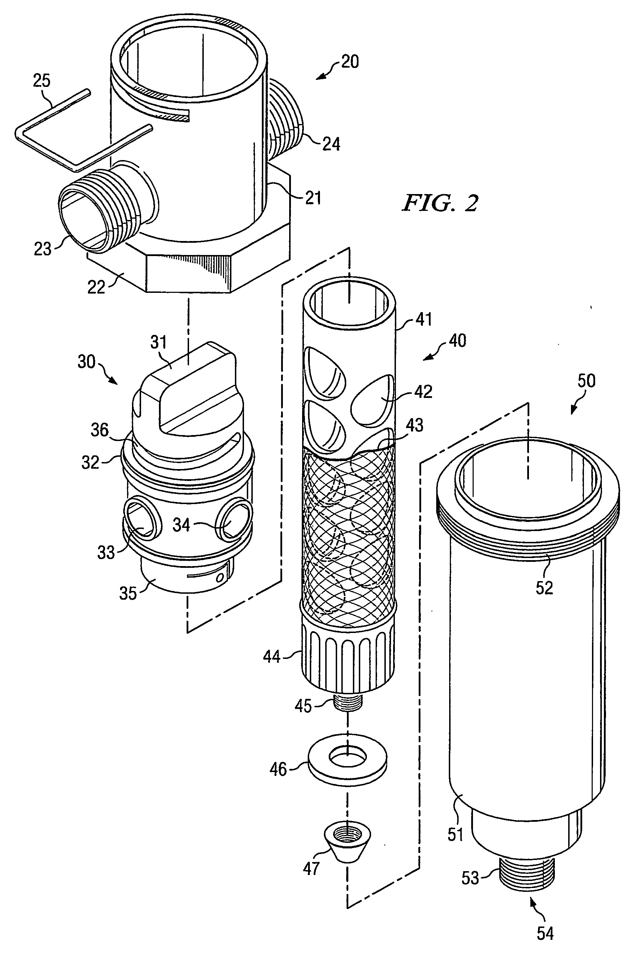

Turning now to **Figure 2****,** the backwash flushing filter assembly **10** is shown in exploded view. Filter assembly **10** is comprised of a header assembly **20,** a rotatable valve assembly **30,** a filter element assembly **40,** and a filter housing assembly **50.** In further detail, the header assembly **20** is comprised of a cylinder cap **21** and cylinder base **22** which includes threaded connector means within the interior circumference of cylinder base **22.** A fluid inlet connect **23** is formed as part of cylinder cap **21** and provides for the inflow of fluid into the backwash flushing filter assembly **10.** The filtered fluid outlet connect **24** is formed as part of cylinder cap **21** and is oriented, in the preferred embodiment, opposite of fluid inlet connect **23,** although other configurations may be utilized depending on the application. Filter fluid outlet connect **24** provides an outlet for fluid that has been filtered by the filter assembly **10.** Set clip **25** is removably inserted into and through the cylinder cap **21** via a preformed slot in cylinder cap **21** as shown. In this embodiment, set clip **25** is utilized to retain the rotatable valve assembly **30,** described in detail below, within the header assembly **20** during filter and backwash operations. An alternative embodiment of the present invention may include one or more independent pins which are inserted through preformed holes in the cylinder cap **21** as the retention mechanism for the rotatable valve assembly **30.** Likewise, additional means for securing the rotatable valve assembly within the header assembly may include threaded screw-type connections, tongue-in-groove connections and locking tabs in various orientations to accomplish the retention objective and allowing for the insertion and removal of the rotatable valve assembly **30** from the header assembly **20.**

The rotatable valve assembly **30** includes a turn knob **31,** two seal gaskets **32,** a backwash fluid inlet port **33,** a filtered fluid outlet port **34,** a top filter coupler **35,** and a turn guide slot **36** which is preformed into the rotatable valve assembly **30** below the turn knob **31** as shown in **Figure 2****.** Rotatable valve assembly **30** includes an interior chamber **38** which during filter operations receives filtered fluid from the filter element assembly **40** and allows for the passage of filtered fluid to the fluid filter outlet port **34.** During backwash mode, backwash fluid is delivered into the interior chamber **38** of the rotatable valve assembly **30** via backwash fluid inlet port **33** which then flows in the reverse direction down through the filter element assembly **40** and results in the backwashing of same. Seal gaskets **32** minimize fluid "blowby" when the filter assembly **10** is switched from filter operation to backwash operations and vice versa and also maintains segregation of the unfiltered inlet fluid, filtered fluid and backwash fluid during filter and backwash operations.

Filter element assembly **40** is comprised of a filter stalk **41,** filter ports **42,** filter media or mesh **43,** lower filter coupler **44** with a threaded gasket stem **45,** a gasket seal **46,** and gasket cap **47.** In the disclosed embodiment, filter stalk **41** is a cylindrical pipe having first and second open ends. The first or lower open end is sealably connected to lower filter coupler **44,** while the second or upper open end is sealably connected to the interior cavity of the rotatable valve assembly **30** via the top filter coupler **35** and releasably locked into place by locking tabs or pin **37.** Gasket seal **46** is releasably connected to lower filter coupler **44** by placement around gasket stem **45** and retained by screwing on gasket cap **47** via the threaded exterior of gasket stem **45.** Alternative embodiments of the filter element assembly may include a barb gasket stem, instead of a threaded gasket stem, which allows the user to simply slip gasket seal **44** over the barbed end of the gasket stem which thereby retains the gasket seal **44** in a secured position. Additional connection means for retaining gasket seal **44** to gasket stem **45** maybe employed as required by the particular application or operating environment. Filter element assembly **40** is thereby releasably secureable within filter housing assembly **50.** The lower filter coupler **44** may also include preformed slots or surface indentations which act to minimize fluid turbulence during filter operation mode, thereby aiding in the capture and sedimentation of accumulated solids at the bottom end of the filter assembly **50**.

Filter housing assembly **50** is comprised of a filter housing **51,** a header/filter body threaded connect **52,** a backwash drain port connect **53,** and a backwash fluid drain port **54.** Filter housing assembly **50** is cylindrical in shape and, in the embodiment shown, is composed of a filter housing **51** with an open upper end and a lower end with a reduced diameter in appropriate relation to the diameter and length of filter element assembly **40.** The lower end of filter housing assembly **50** includes a threaded backwash drain connect **53** and open backwash drain port **54** as depicted in **Figure 2****.**

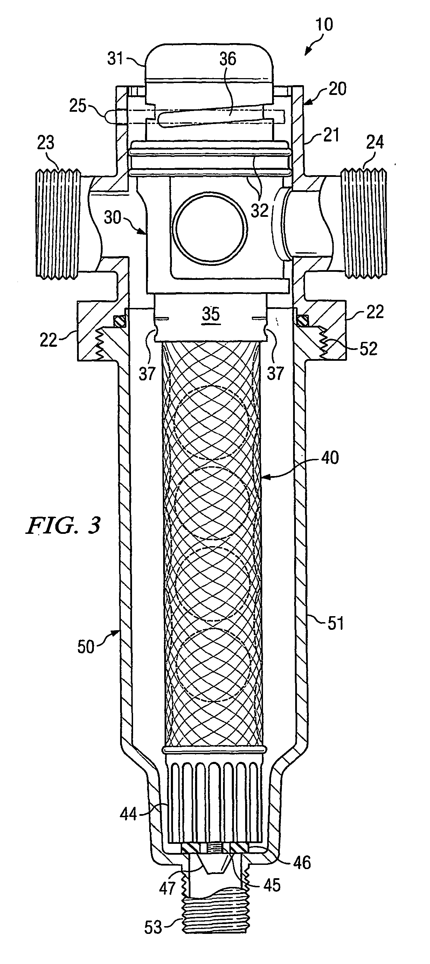

**Figure 3** shows an assembled version of the backwash flushing filter assembly **10.** In the preferred embodiment, the rotatable valve assembly **30** is slidably disposed within the header assembly **20.** Filter element assembly **40** is releasably attached to the rotatable valve assembly via locking tab **37.** The filter housing assembly **50** is releasably secured to the header assembly **20** via threaded connects **52.** After assembly in this manner, the filter assembly **10** is ready for placement in an operational environment.

A plurality of pipes may be connected to the filter assembly **10** for introducing fluids into and removing fluids from the filter assembly **10.** In the present embodiment, a fluid source pipe **12** and a filter fluid outlet pipe **14** are connected to the filter assembly **10,** via fluid inlet connect **23** and fluid outlet connect **24,** respectively, so as to communicate with the interior of the header assembly **20,** rotatable valve assembly **30,** filter element assembly **40,** and filter housing assembly **50.** The fluid source pipe **12** is used to introduce an unfiltered inlet fluid to be filtered into the header assembly **20** and filter housing assembly **50** from an un-illustrated source, the filtered fluid outlet pipe **14** transports filtered fluid downstream, and the backwash drain pipe **16** is used to remove unwanted debris suspended in the backwash fluid from the filter element assembly **40** and filter housing assembly **50** via backwash drain port **54.**

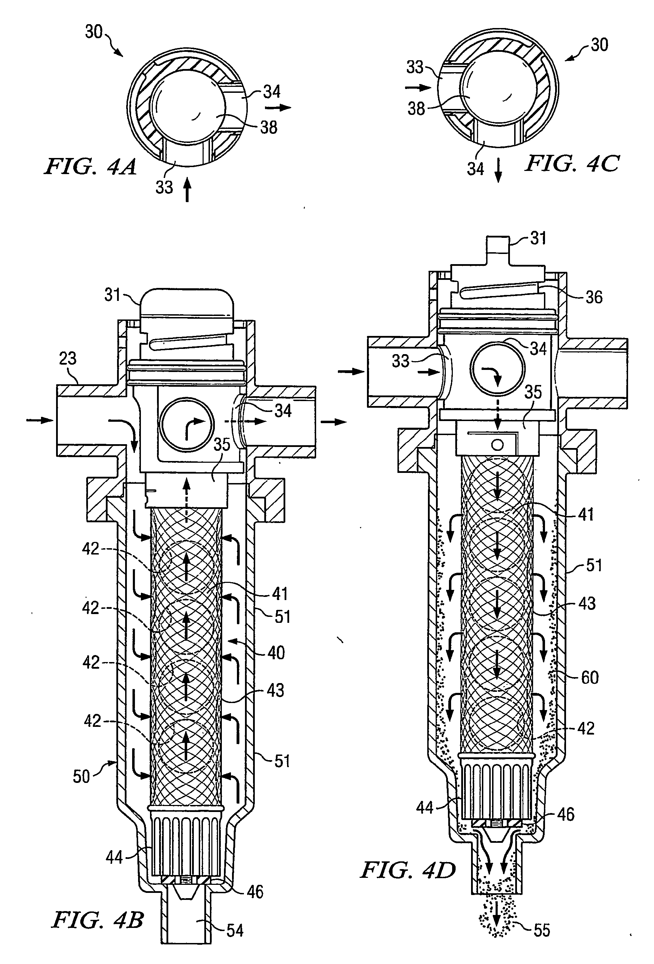

Turning to **Figure 4A****,** a cross-sectional top view of the rotatable valve assembly **30** is shown in the filtration mode position. In this view, regular filter operation is ongoing and the backwash fluid inlet port **33** is shown in the closed position and filter fluid outlet port **34** is shown in the open position. As shown in **Figure 4B****,** inflow fluid to be filtered enters the filter assembly **10** through fluid inlet connect **23** and circulates into the filter housing assembly **50** and contacts the filter element assembly **40.** As the inflow fluid continues to circulate, suspended solids within the inflow fluid contact filter media **43.** At this point, solids of a predetermined size are prevented from passing through filter media **43** while the newly filtered fluid then passes into and up through the filter stalk **41** via filter ports **42** due to the pressure differential between the incoming fluid from fluid source pipe **12** which is under a greater pressure than the fluid pressure present in the filtered fluid outlet pipe **14.** Due to the hydraulic differential, the filtered fluid then moves into the interior cavity **38** of the rotatable valve assembly **30** and exits the interior cavity **38** via filter fluid outlet port **34** and into filter fluid outlet pipe **14.** As the filtration process continues, suspended solid matter will begin to accumulate on filter media **43** and begin to form a sediment deposit at the bottom of the filter housing assembly **50** between the filter element assembly **40** and the filter housing filter housing **51.** In turn, this causes the efficiency of the filtering process to decline to a point at which the controller initiates the filter backwash operation.

Turning to **Figure 4C****,** a cross-sectional top view of the rotatable valve assembly **30** is shown in the backwash mode position. In order to initiate backwashing operations, the rotatable valve assembly **30** is turned a one-quarter turn by manipulation of the turn knob **31.** This causes the filter fluid outlet port **34** to be placed in the closed position and the backwash fluid inlet port **33** to be in the open position, which then results in connection with fluid inlet connect **23** which is in communication with fluid source pipe **12.** Fluid is introduced via fluid source pipe **12** into the interior chamber **38** of the rotatable valve assembly **30** and proceeds down into the interior of the filter stalk **41.** At the same time, due to the inclined slot **36** into which the set clip **25** is positioned, by turning turn knob **31** a one-quarter turn, the rotatable valve assembly **30** and filter element assembly **40** proceeds to move axially within the header assembly **20** and filter housing assembly **50,** which results in the filter element assembly **40** being disconnected from sealed contact with the filter housing **51** via gasket seal **46** which results in the creation of a pressure differential between the fluid source pipe **12** and the backwash drain port **54.** As a result, backwash fluid flows from the interior of filter stalk **41** via filter ports **42** and back through filter media **43.** This reversal of fluid flow results in a hydraulic shearing mechanism by which suspended solids **60** are washed away from the filter media **43** and exit filter element assembly **40** via backwash drain port **54.** Likewise, the reversal of fluid flow through the filter element assembly **40** creates a "flushing" action which erodes and removes, via backwash drain port **54,** any sedimentary build up that has collected at the bottom of the filter housing assembly **50** between the filter element assembly **40** and the filter housing filter housing **51.** During the backwashing cycle, the gasket seal **46** is securely held in place around the gasket stem **45** by gasket cap **47** thereby preventing the gasket seal **46** from becoming dislodged and blocking the backwash drain port **54** during backwash operations by the fluid turbulence generated during backwash operations.

After the backwash operation is complete, the controller turns turn knob **31** a reverse one-quarter turn. This results in the filter fluid outlet port **34** returning to the open position and the backwash fluid inlet port **33** to be placed in the closed position. Fluid to be filtered once again enters the filter assembly **10** through fluid inlet connect **23,** circulates into the filter housing assembly **50** and contacts the filter element assembly **40** as previously discussed. At the same time, due to the inclined slot **36** into which the set clip **25** is positioned, by turning turn knob **31** a reverse one-quarter turn, the rotatable valve assembly **30** and filter element assembly **40** move axially in the reverse direction and enter into sealed contact with the filter housing **51** via gasket seal **46** which results in the creation of a pressure differential between the fluid source pipe **12** and the filtered fluid outlet pipe **14.** The fluid then contacts the filter media **43** resulting in the removal of suspended solids and the filtered fluid then moves into the interior volume of the filter stalk **41,** then into the interior chamber **38** of the rotatable valve assembly **30** and exits the rotatable valve assembly **30** via the filtered fluid outlet port **34.**

An additional feature of the invention disclosed herein allows for the simple and quick removal and replacement of the filter media **43,** without the need to remove the entire filter assembly **10** from the piping system. To change the filter media **43** or filter stalk **41,** the user may simply shut off fluid communication to the filter assembly **10,** pull set clip **25** out of the header assembly **20** and remove the rotatable valve assembly **30** and filter element assembly **40** from the filter housing assembly **50.** The user can then remove, reinstall and/or change the filter media or an entire filter stalk as the need arises. The user then reassembles the filter assembly **10** in the reverse order of the steps outlined above, reinitiates fluid communication with the filter assembly **10** and resumes filter operations.

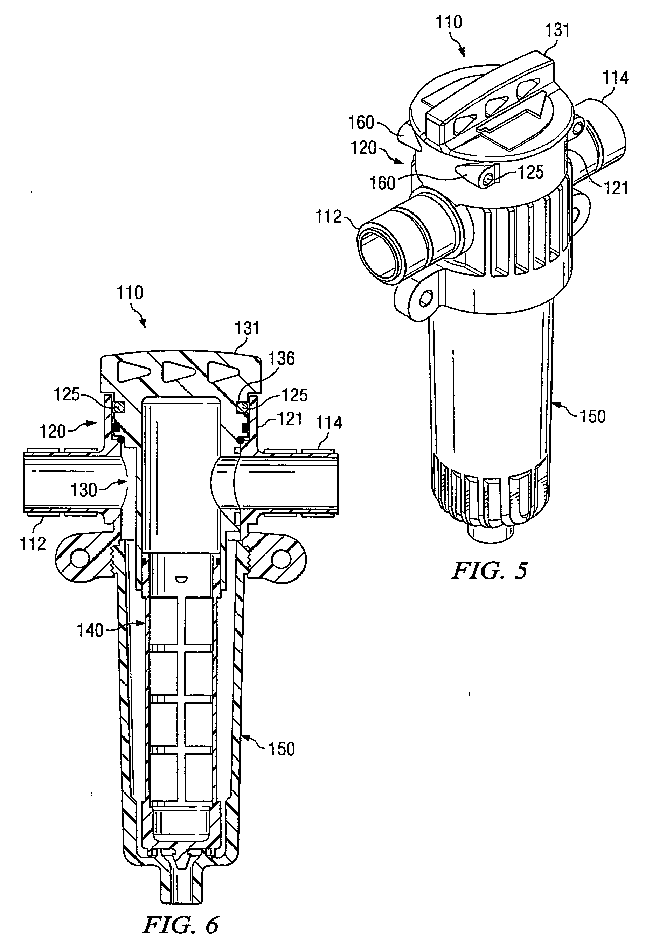

**Figure 5** is a perspective view of a backwash flushing filter assembly in accordance with another embodiment of the invention disclosed herein. **Figure 6** is a profile cross-sectional view of the backwash flushing filter assembly of **Figure 5** shown in the assembled mode. Like the filter assembly **10** shown in **Figures 1** and **2****,** the filter assembly **110** shown in **Figures 5** and **6** comprises a header assembly **120,** a rotatable valve assembly **130,** a filter element assembly **140,** and a filter housing assembly **150.** A fluid source pipe **112** directs fluid into a cylinder cap **121** of the header assembly 120, thereby providing an inflow of fluid into the backwash flushing filter assembly 10. A filtered fluid outlet pipe 114 of the cylinder cap 121 is oriented, in a preferred embodiment, opposite of the fluid source pipe 112, although other configurations may be utilized depending on the application. The filtered fluid outlet pipe 114 provides an outlet for fluid that has been filtered by the filter assembly 110. Rather than using a set clip 25 to retain the rotatable valve assembly 30 as shown in Figure 3, an alternative embodiment of the present invention, as shown in Figure 5, may include one or more independent pins 125 which are inserted through pin guides 160 in the cylinder cap 121 as the retention mechanism for the rotatable valve assembly 130. Likewise, additional means for securing the rotatable valve assembly within the header assembly may include threaded screw-type connections, tongue-in-groove connections and locking tabs in various orientations to accomplish the retention objective and allowing for the insertion and removal of the rotatable valve assembly from the header assembly.

Returning to Figures 5 and 6, each pin guide 160 has a longitudinal bore 136 to accommodate a set pin 125. If desired, the longitudinal bore 136 can be threaded to help retain a threaded set pin 125. Each longitudinal bore 136 within the respective pin guide 160 opens briefly into the interior of the header assembly 120 such that when set pins 125 are inserted into the pin guides 160, the pins also pass through turn-guide slots of the rotatable valve assembly 1.30, thereby securing the rotatable valve assembly 130 in place. The rotatable valve assembly 130 can be rotated by turning the turn knob 131, and the valve assembly 130 will still remain secured by the set pins 125, which pass through portions of the turn-guide slots. The spiral configuration of the turn-guide slots, however, enables the rotatable valve assembly 130 and the attached filter element assembly 140 to rise or descend as it is turned, which in turn opens and closes a backwash fluid drain port. The rotatable valve assembly 130 and filter element assembly 140 can be detached from the filter housing assembly by removing the set pins 125 from the pin guides 160.

The backwashing filter apparatus and method disclosed herein are subject to application and modification by those of ordinary skill in the art. Although the present invention has been described in terms of an exemplary embodiment, it is not limited to these embodiments and modifications.

## Claims

1. A backwash, flushing filter assembly comprising:
a header assembly (20) wherein the header assembly (20) includes a cylinder cap (21), a cylinder base (22) with threaded connector means disposed within the interior circumference of the cylinder base, a fluid inlet connect (23) and a filtered fluid outlet connect (24);
a rotatable valve assembly (30) which is slidably connected to the header assembly (20) wherein the rotatable valve assembly (30) includes an interior chamber with a backwash fluid inlet port (33), a filtered fluid outlet port (34), and at least one seal gasket (32);
a filter element assembly (40) which is releasably connected to the rotatable valve assembly (30) wherein the filter element assembly (40) includes, a filter stalk (41) with filter ports (42) formed in the filter stalk (41), and a filter media (43) disposed around the exterior of the filter stalk (41), and a gasket stem (45); and,
a filter housing assembly (50) which is releasably connected to the header assembly (20) wherein the filter housing assembly (50) includes a filter housing (51) and a backwash drain port (53), wherein said backwash drain port (53) is located at the bottom of the filter housing (51);
further wherein the rotatable valve assembly has an inclined slot (36) about its external surface, thereby enabling the filter stalk (41) to be adjustably secured within the filter housing yet axially moveable by rotation of the rotatable valve assembly (30);
further wherein the rotatable valve assembly (30) is rotatable between a filtration position and a backwash position located one-quarter turn from the filtration position, such that in the filtration position the gasket stem (45) of the filter element assembly (40) covers the backwash drain port (53) at the bottom of the filter housing (51), and such that in the backwash position the backwash drain port (53) is uncovered by the gasket stem (45) of the filter element assembly (40): and
further wherein rotation of the rotatable valve assembly reverses the direction of fluid flow through the filter.

2. The assembly of claim 1 wherein the header assembly (20) and filter housing assembly (50) are detachably connected via threaded connects.

3. The assembly of claim 1 or claim 2 wherein a set clip (25) is inserted through the cylinder cap (21) and mates to a slot in the rotatable valve assembly (30) for releasably securing the rotatable valve assembly (30) and filter element assembly (40) within the filter housing assembly (50).

4. The assembly of any preceding claim wherein the rotatable valve assembly (30) further includes a turn knob (31) and a turn guide slot formed on the exterior circumference of the rotatable valve assembly (30).

5. The assembly of any preceding claim wherein the rotatable valve assembly (30) further includes a top filter coupler (35).

6. The assembly of any preceding claim wherein the filter element assembly (40) further includes a lower filter coupler (44).

7. The assembly of claim 5 or 6 wherein the filter stalk (41) is releasably connected to the rotatable valve assembly (30) via the top filter coupler (35) by locking pins.

8. The assembly of claim 5 or 6 wherein the upper end of the filter stalk (41) is releasably connected to the rotatable valve assembly (30) via the O filter coupler by locking tabs.

9. The assembly of any of claims 6 to 8 wherein the lower end of the filter stalk (41) is releasably connected to the lower filter coupler (44).

10. The assembly of any of claims 6 to 9 wherein the lower filter coupler (44) includes a gasket stern.

11. The assembly of claim 10 wherein a gasket seal (46) is placed around the gasket stem (45) of the lower filter coupler (44) and detachably secured thereto by a gasket cap (47).

12. The assembly of claim 11 wherein the lower filter coupler gasket stem (45) and gasket cap (47) are releasably connected via threaded means.

13. The assembly of any preceding claim wherein the filter stalk ports (42) are formed circular shape slots in the filter stalk (41).

14. The assembly of claim 1 wherein the filter stalk ports (42) are formed rectangular slots in the filter stalk (41).

15. The assembly of any preceding claim wherein a removable set clip (25) detachably secures the filter housing (51) with the rotatable valve assembly (30).

16. The assembly of claim 15 wherein the removable set clip (25) is inserted through a preformed slot in the cylinder cap (21) thereby securing the rotatable valve assembly (30) and filter element assembly (40) within the filter housing assembly (50).

17. The assembly of any preceding claim wherein the rotation of the rotatable valve assembly (30) results in the axial movement of the rotatable valve assembly (30) and filter element assembly (40).

18. The assembly of any preceding claim wherein the rotation of the rotatable valve assembly (30) reverses the direction of fluid flow through the filter assembly and flushes the collected solids from the bottom of the filter housing assembly (50).

19. The assembly of any of claims 6 to 18 wherein the lower filter coupler (44) includes preformed slots on the exterior surface of the lower filter coupler (44) to assist in the capture of accumulated solids.

20. The assembly of any of claims 6 to 19 wherein the lower filter coupler (44) is removably connected to the filter stalk (41).

21. A method for backwashing an inline filter assembly comprising the steps of:
providing the filter assembly of any of claims 1 to 20;
directing a fluid into the filter assembly;
filtering the fluid through a filter media disposed on the exterior surface of a filter stalk;
turning the rotatable valve assembly (30) which results in the reversal of fluid flow through the filter stalk (41);
removing the debris on the filter media (43) and at the bottom of the filter housing assembly (50) via the backwash drain port (53).

22. The method of claim 21 wherein initiating the backwash operation is accomplished by a one-quarter turn of the rotatable valve assembly (30).

23. The method of claim 21 of claim 22 wherein the filter element assembly is separated from contact with the lower filter coupler gasket seal and the collected solids are removed via the backwash drain port (53) during the backwash operation.

24. The method of any of claims 21 to 23 wherein the backwash operation is terminated by turning the rotatable valve assembly (30) by an opposite one-quarter turn resulting in the resumption of filter operation.

## Patentansprüche

1. Rückspül-Filter-Baugruppe, umfassend:
Eine Kopf-Baugruppe (20), wobei die Kopf-Baugruppe (20) eine
Zylinder-Kappe (21), eine Zylinder-Grundplatte (22) mit Gewinde-Verbindungsmittel, die auf dem inneren Umfang der Zylinder-Grundplatte angeordnet sind, eine Flüssigkeits-Einlass-Verbindung (23) und eine Verbindung zum Auslassen der gefilterten Flüssigkeit (24) enthält;
eine drehbare Ventil-Baugruppe (30), die verschiebbar mit der Kopf-Baugruppe (20) verbunden ist, wobei die drehbare Ventil-Baugruppe (30) eine innere Kammer mit einem Einlass-Anschluss (33) für die Rückspül-Flüssigkeit, einen Auslass-Anschluss (34) für die gefilterte Flüssigkeit und mindestens eine Dichtung (32) enthält;
eine Filterelement-Baugruppe (40), die lösbar mit der drehbaren Ventil-Baugruppe (30) verbunden ist, wobei die Filterelement-Baugruppe (40) ein Filterrohr (41) mit Filter-Öffnungen (42), die in dem Filterrohr (41) ausgebildet sind, und ein Filtermedium (43), das um die Außenseite des Filterrohres (41) angeordnet ist, und einen Dichtungs-Schaft (45) enthält; und
eine Filtergehäuse-Baugruppe (50), die lösbar mit der Kopf-Baugruppe (20) verbunden ist, wobei die Filtergehäuse-Baugruppe (50) ein Filtergehäuse (51) und einen Ablass-Anschluss für die Spülflüssigkeit (53), der sich an der Unterseite des Filtergehäuses (51) befindet, umfasst;
wobei ferner die drehbare Ventil-Baugruppe einen schrägen Schlitz (36) an ihrer äußeren Oberfläche hat, wodurch das Filterrohr (41) justierbar im Filtergehäuse befestigt werden kann und doch axial durch Drehung der drehbaren Ventil-Baugruppe (30) beweglich ist; wobei ferner die drehbare Ventil-Baugruppe (30) zwischen einer Filterposition und einer Rückspül-Position, die eine Vierteldrehung von der Filterposition entfernt ist, drehbar ist, so dass in der Filterposition der Dichtungs-Schaft (45) der Filterelement-Baugruppe (40) den Ablass-Anschluss für die Spülflüssigkeit (53) an der Unterseite des Filtergehäuses (51) abdeckt und dass in der Rückspül-Position der Ablass-Anschluss für die Spülflüssigkeit (53) nicht durch den Dichtungs-Schaft (45) der Filterelement-Baugruppe (40) abgedeckt ist; und
wobei ferner die Drehung der drehbaren Ventil-Baugruppe die Flussrichtung der Flüssigkeit durch den Filter umkehrt.

2. Baugruppe nach Anspruch 1, **dadurch gekennzeichnet, dass** die Kopf-Baugruppe (20) und die Filtergehäuse-Baugruppe (50) lösbar über Gewinde-Verbindungen miteinander verbunden sind.

3. Baugruppe nach Anspruch 1 oder Anspruch 2, **dadurch gekennzeichnet, dass** ein Befestigungs-Bügel (25) durch die Zylinder-Kappe (21) gesteckt wird und in einen Schlitz in der drehbaren Ventil-Baugruppe (30) passt, um die drehbare Ventil-Baugruppe (30) und die Filterelement-Baugruppe (40) in der Filtergehäuse-Baugruppe (50) lösbar zu befestigen.

4. Baugruppe nach einem beliebigen der obigen Ansprüche, **dadurch gekennzeichnet, dass** die drehbare Ventil-Baugruppe (30) ferner einen Drehknopf (31) und einen Drehungs-Führungsschlitz, der auf der äußeren Oberfläche der drehbaren Ventil-Baugruppe (30) ausgebildet ist, beinhaltet.

5. Baugruppe nach einem beliebigen der vorherigen Ansprüche, **dadurch gekennzeichnet, dass** die drehbare Ventil-Baugruppe (30) ferner einen oberen Filter-Koppler (35) beinhaltet.

6. Baugruppe nach einem beliebigen der vorherigen Ansprüche, **dadurch gekennzeichnet, dass** die Filterelement-Baugruppe (40) ferner einen unteren Filter-Koppler (44) beinhaltet.

7. Baugruppe nach Anspruch 5 oder 6, **dadurch gekennzeichnet, dass** das Filterrohr (41) über den oberen Filter-Koppler (35) durch Verriegelungsstifte lösbar mit der drehbaren Ventil-Baugruppe (30) verbunden ist.

8. Baugruppe nach Anspruch 5 oder 6, **dadurch gekennzeichnet, dass** das obere Ende des Filterrohres (41) über den oberen Filter-Koppler durch Verriegelungsnasen lösbar mit der drehbaren Ventil-Baugruppe (30) verbunden ist.

9. Baugruppe nach einem beliebigen der Ansprüche 6 bis 8, **dadurch gekennzeichnet, dass** das untere Ende des Filterrohres (41) lösbar mit dem unteren Filter-Koppler (44) verbunden ist.

10. Baugruppe nach einem beliebigen der Ansprüche 6 bis 9, **dadurch gekennzeichnet, dass** der untere Filter-Koppler (44) einen Dichtungs-Schaft enthält.

11. Baugruppe nach Anspruch 10, **dadurch gekennzeichnet, dass** eine Dichtung (46) um den Dichtungs-Schaft (45) des unteren Filter-Kopplers (44) angeordnet und an ihm lösbar mit einer Dichtungskappe (47) befestigt ist.

12. Baugruppe nach Anspruch 11, **dadurch gekennzeichnet, dass** der Dichtungs-Schaft (45) des unteren Filter-Kopplers und die Dichtungskappe (47) über Gewinde-Mittel lösbar miteinander verbunden sind.

13. Baugruppe nach einem beliebigen der vorherigen Ansprüche, **dadurch gekennzeichnet, dass** die Öffnungen (42) des Filterrohres als kreisförmige Aussparungen im Filterrohr (41) ausgebildet sind.

14. Baugruppe nach Anspruch 1, **dadurch gekennzeichnet, dass** die Öffnungen (42) des Filterrohres als rechteckige Aussparungen im Filterrohr (41) ausgebildet sind.

15. Baugruppe nach einem beliebigen der vorherigen Ansprüche, **dadurch gekennzeichnet, dass** ein abnehmbarer Befestigungs-Bügel (25) das Filtergehäuse (51) lösbar an der drehbaren Ventil-Baugruppe (30) befestigt.

16. Baugruppe nach einem beliebigen der vorherigen Ansprüche, **dadurch gekennzeichnet, dass** der abnehmbare Befestigungs-Bügel (25) durch einen vorgeformten Schlitz in der Zylinder-Kappe (21) gesteckt wird, wodurch die drehbare Ventil-Baugruppe (30) und die Filterelement-Baugruppe (40) in der Filtergehäuse-Baugruppe (50) befestigt werden.

17. Baugruppe nach einem beliebigen der vorherigen Ansprüche, **dadurch gekennzeichnet, dass** die Drehung der drehbaren Ventil-Baugruppe (30) zu einer axialen Bewegung der drehbaren Ventil-Baugruppe (30) und der Filterelement-Baugruppe (40) führt.

18. Baugruppe nach einem beliebigen der vorherigen Ansprüche, **dadurch gekennzeichnet, dass** die Drehung der drehbaren Ventil-Baugruppe (30) die Flussrichtung der Flüssigkeit durch die Filter-Baugruppe umkehrt und die gesammelten Feststoffe aus der Unterseite der Filtergehäuse-Baugruppe (50) spült.

19. Baugruppe nach einem beliebigen der Ansprüche 6 bis 18, **dadurch gekennzeichnet, dass** der untere Filter-Koppler (44) auf der äußeren Oberfläche des unteren Filter-Kopplers (44) vorgeformte Schlitze beinhaltet, um das Erfassen gesammelter Feststoffe zu unterstützen.

20. Baugruppe nach einem beliebigen der Ansprüche 6 bis 19, **dadurch gekennzeichnet, dass** der untere Filter-Koppler (44) abnehmbar mit dem Filterrohr (41) verbunden ist.

21. Verfahren zum Rückspülen einer in einer Leitung befindlichen Filter-Baugruppe, folgende Schritte umfassend:
Bereitstellen einer Filter-Baugruppe nach einem beliebigen der Ansprüche 1 bis 20;
Leiten einer Flüssigkeit in die Filter-Baugruppe;
Filtern der Flüssigkeit durch ein Filtermedium, das auf der Außenseite eines Filterrohres angeordnet ist;
Drehen der drehbaren Ventil-Baugruppe (30), was zu einer Umkehrung der Flussrichtung der Flüssigkeit durch das Filterrohr (41) führt;
Entfernen der Ablagerungen auf dem Filtermedium (43) und auf dem Boden der Filtergehäuse-Baugruppe (50) über den Ablass-Anschluss für die Spülflüssigkeit (53).

22. Verfahren nach Anspruch 21, **dadurch gekennzeichnet, dass** die Rückspül-Operation durch eine Vierteldrehung der drehbaren Ventil-Baugruppe (30) ausgelöst wird.

23. Verfahren nach Anspruch 21 oder Anspruch 22, **dadurch gekennzeichnet, dass** der Kontakt der Filterelement-Baugruppe mit der Dichtung des unteren Filter-Kopplers gelöst wird und die gesammelten Feststoffe während der Rückspül-Operation über den Rückspül-Ablass-Anschluss (53) entfernt werden.

24. Verfahren nach einem beliebigen der Ansprüche 21 bis 23, **dadurch gekennzeichnet, dass** die Rückspül-Operation beendet wird, indem die drehbare Ventil-Baugruppe (30) durch eine Vierteldrehung in Gegenrichtung gedreht wird, was zur Wiederaufnahme der FilterOperation führt.

## Revendications

1. Ensemble de filtre à chasse et à lavage à contre-courant comprenant :
un ensemble de collecteur de tête (20) dans lequel l'ensemble de collecteur de tête (20) comprend une protection de cylindre (21), une base de cylindre (22) ayant un moyen de raccord fileté disposé à l'intérieur de la circonférence intérieure de la base de cylindre, un raccord d'entrée de fluide (23) et un raccord de sortie de fluide filtré (24),
un ensemble de vanne rotative (30) qui est relié avec possibilité de coulissement à l'ensemble de collecteur de tête (20) où l'ensemble de vanne rotative (30) comprend une chambre intérieure avec un orifice d'entrée de fluide de lavage à contre-courant (33), un orifice de sortie de fluide filtré (34) et au moins un joint d'étanchéité (32),
un ensemble d'élément de filtre (40) qui est relié de façon amovible à l'ensemble de vanne rotative (30) où l'ensemble d'élément de filtre (40) comprend une structure de filtre (41) ayant des orifices de filtre (42) formés dans la structure de filtre (41) et un milieu de filtration (43) disposé autour de l'extérieur de la structure de filtre (41) et une tige d'étanchéité (45), et
un ensemble de logement de filtre (50) qui est relié de façon amovible à l'ensemble de collecteur de tête (20) dans lequel l'ensemble de logement de filtre (50) comprend un logement de filtre (51) et un orifice de purge de lavage à contre-courant (53), où ledit orifice de purge de lavage à contre-courant (53) est situé au fond du logement de filtre (51),
en outre où l'ensemble de vanne rotative présente une fente inclinée (36) autour de sa surface externe, en permettant de cette manière à la structure de filtre (41) d'être fixée de façon réglable à l'intérieur du logement de filtre en étant cependant axialement mobile par la rotation de l'ensemble de vanne rotative (30),
en outre dans lequel l'ensemble de vanne rotative (30) peut être tourné entre une position de filtration et une position de lavage à contre-courant située à un quart de tour par rapport à la position de filtration, de telle sorte que, dans la position de filtration, la tige d'étanchéité (45) de l'ensemble d'élément de filtre (40) recouvre l'orifice de purge de lavage à contre-courant (53) au fond du logement de filtre (51) et de telle sorte que, dans la position de lavage à contre-courant, l'orifice de purge de lavage à contre-courant (53) n'est pas recouvert par la tige d'étanchéité (45) de l'ensemble d'élément de filtre (40), et
en outre dans lequel la rotation de l'ensemble de vanne rotative inverse le sens de l'écoulement de fluide à travers le filtre.

2. Ensemble selon la revendication 1, dans lequel l'ensemble de collecteur de tête (20) et l'ensemble de logement de filtre (50) sont reliés de façon amovible par l'intermédiaire de raccords filetés.

3. Ensemble selon la revendication 1 ou la revendication 2, dans lequel un étrier de fixation (25) est inséré à travers la protection de cylindre (21) et s'adapte dans une fente dans l'ensemble de vanne rotative (30) pour fixer de manière amovible l'ensemble de vanne rotative (30) et l'ensemble d'élément de filtre (40) à l'intérieur de l'ensemble de logement de filtre (50).

4. Ensemble selon l'une quelconque des revendications précédentes, dans lequel l'ensemble de vanne rotative (30) comprend en outre un bouton pour tourner (31) et une fente de guidage de rotation formés sur la circonférence extérieure de l'ensemble de vanne rotative (30).

5. Ensemble selon l'une quelconque des revendications précédentes, dans lequel l'ensemble de vanne rotative (30) comprend en outre un coupleur de filtre supérieur (35).

6. Ensemble selon l'une quelconque des revendications précédentes, dans lequel l'ensemble d'élément de filtre (40) comprend en outre un coupleur de filtre inférieur (44).

7. Ensemble selon la revendication 5 ou 6, dans lequel la structure de filtre (41) est reliée de façon amovible à l'ensemble de vanne rotative (30) par l'intermédiaire du coupleur de filtre supérieur (35) par des broches de verrouillage.

8. Ensemble selon la revendication 5 ou 6, dans lequel l'extrémité supérieure de la structure de filtre (41) est reliée de façon amovible à l'ensemble de vanne rotative (30) par l'intermédiaire du coupleur de filtre supérieur par des pattes de verrouillage.

9. Ensemble selon l'une quelconque des revendications 6 à 8, dans lequel l'extrémité inférieure de la structure de filtre (41) est reliée de façon amovible au coupleur de filtre inférieur (44).

10. Ensemble selon l'une quelconque des revendications 6 à 9, dans lequel le coupleur de filtre inférieur (44) comprend une tige d'étanchéité.

11. Ensemble selon la revendication 10, dans lequel un joint d'étanchéité (46) est placé autour de la tige d'étanchéité (45) du coupleur de filtre inférieur (44) et fixé de façon amovible à celle-ci par un capuchon d'étanchéité (47).

12. Ensemble selon la revendication 11, dans lequel la tige d'étanchéité de coupleur de filtre inférieur (45) et le capuchon d'étanchéité (47) sont reliés de façon amovible par l'intermédiaire d'un moyen fileté.

13. Ensemble selon l'une quelconque des revendications précédentes, dans lequel les orifices de la structure de filtre (42) sont formés de fentes à forme circulaire dans la structure de filtre (41).

14. Ensemble selon la revendication 1, dans lequel les orifices de la structure de filtre (42) se présentent sous forme de fentes rectangulaires dans la structure de filtre (41).

15. Ensemble selon l'une quelconque des revendications précédentes, dans lequel un étrier de fixation amovible (25) fixe de façon amovible le logement de filtre (51) avec l'ensemble de vanne rotative (30).

16. Ensemble selon la revendication 15, dans lequel l'étrier de fixation amovible (25) est inséré à travers une fente préformée dans la protection de cylindre (21), en fixant de cette manière l'ensemble de vanne rotative (30) et l'ensemble d'élément de filtre (40) à l'intérieur de l'ensemble de logement de filtre (50).

17. Ensemble selon l'une quelconque des revendications précédentes, dans lequel la rotation de l'ensemble de vanne rotative (30) résulte en le mouvement axial de l'ensemble de vanne rotative (30) et de l'ensemble d'élément de filtre (40).

18. Ensemble selon l'une quelconque des revendications précédentes, dans lequel la rotation de l'ensemble de vanne rotative (30) inverse le sens de l'écoulement de fluide à travers de filtre et chasse les matières solides collectées du fond de l'ensemble de logement de filtre (50).

19. Ensemble selon l'une quelconque des revendications 6 à 18, dans lequel le coupleur de filtre inférieur (44) comprend des fentes préformées sur la surface extérieure du coupleur de filtre inférieur (44) pour contribuer à la capture des matières solides accumulées.

20. Ensemble selon l'une quelconque des revendications 6 à 19, dans lequel le coupleur de filtre inférieur (44) est relié de façon amovible à la structure de filtre (41).

21. Procédé destiné à effectuer un lavage à contre-courant d'un ensemble de filtre en ligne comprenant les étapes consistant à :
fournir l'ensemble de filtre selon l'une quelconque des revendications 1 à 20,
orienter un fluide jusque dans l'ensemble de filtre,
filtrer le fluide à travers un milieu de filtration disposé sur la surface extérieure d'une structure de filtre,
tourner l'ensemble de vanne rotative (30), ce qui résulte en l'inversion de l'écoulement de fluide à travers la structure de filtre (41),
retirer les débris sur le milieu de filtration (43) et au fond de l'ensemble de logement de filtre (50) par l'intermédiaire de l'orifice de purge de lavage à contre-courant (53).

22. Procédé selon la revendication 21, dans lequel le lancement de l'opération de lavage à contre-courant est accompli par un quart de tour de l'ensemble de vanne rotative (30).

23. Procédé selon la revendication 21 ou la revendication 22, dans lequel l'ensemble d'élément de filtre est séparé d'un contact avec le joint d'étanchéité du coupleur de filtre inférieur et les matières solides collectées sont évacuées par l'intermédiaire de l'orifice de purge de lavage à contre-courant (53) au cours de l'opération de lavage à contre-courant.

24. Procédé selon l'une quelconque des revendications 21 à 23, dans lequel il est mis fin à l'opération de lavage à contre-courant en tournant l'ensemble de vanne rotative d'un quart de tour dans le sens opposé, ce qui a pour résultat la reprise du fonctionnement du filtre.
